# EUROPEAN PATENT APPLICATION

(11) **EP 4 795 919 A1**
(43) Date of publication of application: **26.08.2026**
(21) Application number: 25159484.2
(22) Date of filing: 21.02.2025
(51) Int. Cl.: A01D 43/08, A01D 90/04, A01F 15/10

(54) **CROP CUTTING DEVICE**

(71) Applicant: CNH Industrial Belgium N.V., 8210 Zedelgem (BE)
(72) Inventor: Devroe, Jeroen, 8210 Zedelgem (BE); Liefooghe, Dries, 8210 Zedelgem (BE)
(74) Representative: CNH Industrial IP Department

(57) **Abstract**

The present invention provides a crop cutting device (1) comprising a crop guiding surface (3), a plurality of knives (5) arranged side-by-side, wherein each knife (5) is pivotable about a knife axis (7) between a retracted inoperative position. The crop cutting device further comprises a plurality of operating units (11) in parallel to the plurality of knives (5). The crop cutting device comprises a selector mechanism (13) configured to selectively engage one or more of the plurality of operating units (11), wherein the selector mechanism (13) includes a rotatable shaft (17) comprising a plurality of engagement elements (19) configured to engage with the respective operating unit (11). The operating units (11) are movable between a disengaged position and an engaged position by a lifting mechanism (23) comprising an elongate element extending between a first side and a second side of a main frame (21).

## Description

The present invention relates to a crop cutting device for agricultural machines or implements.

Agricultural machines or implements, such as balers or self-loading wagons, are frequently equipped with cutting devices configured to shred harvested crops for various purposes. Similarly, other agricultural equipment, such as harvesters, may also incorporate such cutting devices.

A typical cutting device within an agricultural machine comprises a crop channel, through which the crop is transported along a crop-guiding surface toward a series of knives. These knives are arranged to cut the crop as it comes into contact with their blades.

The knives are generally positioned side-by-side in rows, with the number of knives protruding from the crop-guiding surface into the crop channel determining the number of effective cutting edges. This arrangement, in turn, defines the achievable length of the shredded crop. It is often desirable to adjust the number of active knives to suit specific cutting applications or to accommodate varying harvesting conditions.

To prevent damage to the knives from stones or other hard, non-shreddable particles, and to facilitate the selection of the desired number of knives, the knives are typically designed to pivot relative to the frame of the cutting device. Each knife can be moved between a non-operating position and an operating position. In the non-operating position, the knife is retracted from the crop channel and is therefore unable to perform cutting. In the operating position, the knife extends into the crop channel, enabling it to cut or crush the crop as it flows past.

To secure each knife in the operating position, a clamping or operating unit is provided, often incorporating a spring element. A common movable actuator is used to pivot the operating units and their respective knives between the non-operating and operating positions. However, with the increasing number of knives installed in modern cutting devices and the significant forces involved, the process of moving and selecting knives poses a considerable mechanical challenge.

DE 43 02 199 A1 describes a crop cutting device with chopping knives that protrude into a conveyor passage and interact with tines on a rotor. The knives are held in the working position by controlled supports, which can release them individually or collectively to swing into an idle position. An elastic overload-protection system allows the knives to briefly retract upon encountering foreign objects. Each support includes a spring-loaded thrust rod engaging a positioning recess in its respective knife. The rods, supported by springs, are connected to a common cross-member moved by one or more rams. Each rod, with its spring, forms an overload-protection mechanism and is coupled to a bar that releases or retains the knife. A cam on the bar interacts with a rotatable control shaft to engage or disengage the knife.

DE 198 05 854 C1 describes a crop cutting device where each pivotable knife is operated by a spring-loaded sliding bar with a roller. The roller end of the sliding bar is supported by an arm that rotates about a shaft. Some support arms extend to varying depths below the shaft. A blocking bar, parallel to the shaft, can be raised to different heights to engage the extended arms and block the pivoting movement of specific knives.

EP 2 653 025 A1 describes a cutting device with a cam shaft that lifts selected spring-loaded arms from a bypassed position into engagement with an actuator, extending the corresponding knives. In the retracted position, the knives still slightly protrude from the slotted plate, obstructing crop flow. The device is relatively complex and prone to failure in dusty environments due to repeated disengagement and re-engagement of the spring-loaded arms.

EP 2 110 014 A1 describes a cutting device with a selection shaft received in circular openings of knife-operating levers. Narrow channels connect each knife edge to its circular opening. The shaft has flattened parts that fit in the channels, allowing it to lock a knife in place or pass through the channel to extend the knife. In the retracted position, the knives are fully hidden beneath the crop inlet channel, making maintenance difficult. The design requires significant space, features complex lever and shaft shapes, and is prone to jamming due to repeated shaft movement through the narrow channels.

EP 1 609 354 A1 discloses a crop cutting device with a selector mechanism featuring blocking tabs that interact with roll pins on support rods connected to the knives. The tabs are part of four fixed strips mounted on a cylindrical tube, which can be raised or lowered to engage or disengage the tabs. In the retracted position, the knives still slightly protrude from the slotted plate, obstructing crop flow. The fixed arrangement of the tabs prevents user customization of their spacing.

Another technical solution by the applicant describes a construction with a double frame having a first frame portion and a second frame portion which are pivotably connected and movable relative to each other in order to disengage and engage the selector mechanism with the knife units. Such structure having two frame portions is heavy, difficult to operate, and thus costly, particularly when attempting to automate its movement.

Yet another application by the applicant discloses a crop cutting device having a lifting mechanism for the operating units of the knives and a selector mechanism for selecting the number of knives which functions independently from the lifting mechanism. The operation of this structure is, however, cumbersome, lengthy and rather unhandy for execution in the field as it involves a high manual force and is not intuitive for the user. Thus, there is a likelihood of misuse and a possible danger of damaging the device.

It is therefore the object of the present invention to provide a crop cutting device which overcomes at least some of the disadvantages of the prior art as listed above, which represents a rather simple, light, manually operable and also automatable construction, which enables a smooth, fail-safe and remotely controllable knife selection, which requires little installation space, and which generally ensures a reliable and secure cutting function also in a very dusty environment.

This object is achieved by the subject matter of claims 1 and 17 of the present invention. Advantageous embodiments and aspects are described in the dependent claims.

According to an aspect of the invention a crop cutting device is proposed which comprises:
a crop guiding surface including a plurality of substantially parallel slots extending in a crop transport direction over the crop guiding surface;
a plurality of knives arranged side-by-side, wherein each knife is aligned with a respective slot and is pivotable about a knife axis extending substantially perpendicular to the slots;
a plurality of operating units in parallel to the plurality of knives being movable between a disengaged position and an engaged position;
a selector mechanism configured to selectively engage one or more of the plurality of operating units, wherein the selector mechanism comprises at least one selection position and a rotatable shaft, wherein the rotatable shaft comprises a plurality of engagement elements, each engagement element configured to engage with the respective operating unit; and
a lifting mechanism comprising an elongate element extending between a first side and a second side of a main frame of the crop cutting device and a rotating element rotatable by a drive shaft wherein the elongate element is configured to be moved between a low position and a lifted position and vice versa, thereby moving the operating units between one and the other of the engaged position and the disengaged position,
wherein the drive shaft of the lifting mechanism is configured to engage with the rotatable shaft of the selector mechanism such that during engagements, a rotation of the drive shaft is converted into a rotation of the rotatable shaft, while between engagements, the rotatable shaft remains stationary.

With these features, a crop cutting device is provided that is lightweight compared to known constructions of the prior art, effortless to operate as well as simple to manufacture and to handle which increases the cost effectiveness. Precise and periodic stops of the rotatable shaft are achieved while the drive shaft is in rotation. A synchronization between the movements of the selector mechanism and the lifting mechanism is thereby accomplished. Finally, an automated operation of the crop cutting device is facilitated due to the synchronization between said movements and due to the mechanical precision. This enables a remote operation of the crop cutting device from the cabin without manual intervention and without relying on complex electronics or sensors.

The rotating element may be in some embodiments a slider cam unit or a closed cam unit, which both translate a rotational movement of the drive shaft into an up and downward movement of the elongate element.

Preferably, in some embodiments, each operating unit is associated with a respective knife or a plurality of knives. Hence, different cutting strategies can be realized.

In embodiments, when the drive shaft and the rotatable shaft are disengaged, the rotatable shaft may be securely locked against rotation in both clockwise and counterclockwise directions. As a result, the rotatable shaft remains stationary between periods of engagement, ensuring a self-locking of the selector mechanism in specific positions during the operation of the crop cutting device. Consequently, no additional locking mechanism is required to secure the selector mechanism during operation enhancing stability and reliability.

The engagements elements are preferably rotationally fixed to the rotatable shaft, e.g. by welding, positive engagement or other known fastening means. With this measure a rigid connection for transmitting torque is provided.

In some embodiments, the drive shaft may comprise a drive plate having a pin which may be configured to engage with one of a plurality of radial slots provided on a selection plate of the rotatable shaft.

The drive plate may in some embodiments be configured as a Geneva drive wheel. The selection plate may in some embodiments be a driven Geneva wheel. The drive plate may comprise at least one pin, preferably multiple pins, configured to engage with a corresponding radial slot of the selection plate. Preferably, the drive shaft may be coaxially aligned with the drive plate. The drive plate can comprise at least one convex circular circumferential surface. The selection plate may comprise at least one concave circumferential surface. The convex circumferential surfaces of the drive plate may correspond to matching concave circumferential surfaces of the selection plate. In some embodiments, the drive plate may comprise a cutout around each pin, interrupting the convex circular circumferential surface of the drive plate.

The interaction between the lifting mechanism and the selector mechanism features a Geneva mechanism which enables intermittent motion with precise angular positioning, controlled speed and movement during engagement, mechanical precision, i.e. consistent and repeatable positioning, and a simple and space-efficient design. It prevents over-rotation and thus any misuse of an operator.

In other embodiments, the drive plate may be formed by a plurality of parts attached to each other. For example, the drive plate may comprise a carrier plate onto which the pin and a guiding plate are mounted. On the guiding plate, at least one convex circular surface may be arranged. The guiding plate and the pin may be arranged on the same side of the carrier plate. The guiding plate and the pin may be distanced from each other, enabling engagement with the radial slots of selection plate.

For practicality, the carrier plate, the pin, and the guiding plate may be made of metal or steel parts, e.g. by CNC laser cutting and/or CNC machining, and may be welded together. Additionally, the drive plate may be rotationally fixed to the drive shaft, e.g. by welding, positive engagement or other known fastening means. Thereby, a rigid connection between the drive shaft and the drive plate for transferring torque is provided.

The selection plate preferably may comprise at least two radial slots extending from a circumference of the selection plate towards its center. The rotatable shaft may be coaxially aligned with the selection plate. The selection plate may further comprise at least two concave circumferential surfaces on the outer periphery of the selection plate between each radial slot. The radial slots may interrupt the concave circumferential surfaces. The selection plate may be made from a plate, e.g. a steel plate by CNC laser cutting and/or CNC machining.

During operation, a 360° rotation of the drive shaft is converted into a rotation of less than 360° of the rotatable shaft. In certain embodiments, a full 360° rotation of the drive shaft may correspond to a rotation of the rotatable shaft by 180°, 120°, 90°, 60°, 45°, or 30°. More generally, the rotation of the rotatable shaft is determined by a specific pitch relative to the 360° rotation of the drive shaft. This pitch is preferably less than 360° and is uniformly spaced.

The rotatable shaft and the drive shaft may be rotatably supported by both sides of the main frame. Any force acting onto the rotatable shaft and/or the drive shaft may thus be supported by both sides of the main frame.

The elongate element of the lifting mechanism can have various shapes, such as a bar, an elongated plate, a welded assembly of multiple components, or any similar elongate structure connecting the first and second sides of the main frame. It is typically made from a suitable material, such as sheet metal. This simple and robust construction is easy to maintain and repair in remote locations without the need for specialized tools or trained personnel. It can also be operated by a single operator. The elongate element enables the simultaneous lifting of all operating units, providing support to the units throughout the lifting motion.

In embodiments, the elongate element may comprise a first bar and, optionally, a second bar parallel to the first bar. Both of the first and second bars may extend between the first side and the second side of the main frame. The operating units may extend between the first bar and the second bar. Thereby, the second bar forces the operating units towards the extended operating position, e.g. when foreign matter, crop material or increased friction impede the movement of the operating units.

In certain embodiments, the second bar may be positioned above the first bar. Optionally, the first and second bars can be arranged at a predetermined distance from one another, creating a space through which the operating units extend. The first and second bars may be connected at their respective end portions, forming a unified structure. This arrangement ensures that the movement of the operating units toward the extended operating position can be reliably enforced, even under challenging conditions.

In some embodiments, the first and second sides of the main frame may extend substantially parallel to the crop transport direction. These sides may be positioned laterally relative to the plurality of knives arranged side by side. The main frame may laterally enclose at least one of the following components: the plurality of knives, the operating units, the selector mechanism, and the lifting mechanism, relative to the crop transport direction. Preferably, both sides of the main frame collectively support the drive shaft and the rotatable shaft. The first and second sides of the main frame are aligned in a transverse direction relative to the crop transport direction, ensuring structural stability and alignment.

In embodiments, the engagement mechanism between the drive shaft of the lifting mechanism and the rotatable shaft of the selector mechanism, also called Geneva mechanism, may be provided on one side only or on both sides of the main frame of the crop cutting device. Depending on the width and the overall weight of the crop cutting mechanism, it may be sufficient to provide the engagement of the drive shaft and with the rotatable shaft only on one side of the main frame. The drive shaft may extend between the two sides of the main frame. Alternatively, the Geneva mechanism may be provided at a plurality of positions along the lateral direction of the crop cutting device. A plurality of drive plates may be arranged along the drive shaft. A plurality of selection plates may be arranged along the rotatable shaft. Thereby, the torque acting on the respective shaft can be equally distributed along the length of the respective shafts.

In some embodiments, the engagement mechanism between the drive shaft of the lifting mechanism and the rotatable shaft of the selector mechanism (Geneva mechanism) may be located on one or both sides of the main frame of the crop cutting device. Depending on the width and weight of the crop cutting mechanism, a single engagement point on one side of the frame may suffice. The drive shaft may be arranged at positions across the width of the main frame, or the Geneva mechanism may be positioned at multiple locations along the lateral direction of the device. Multiple drive plates can be arranged along the drive shaft, and multiple selection plates can be arranged along the rotatable shaft, ensuring even torque distribution along their lengths.

In some embodiments, the main frame may include two side plates, positioned on the first and second sides, respectively. Features related to the side plates are applicable to one or both sides of the main frame interchangeably. Each side plate may include a guiding mechanism designed to guide the elongate element linearly. Preferably, the guiding mechanism consists of a slotted hole within each side plate, through which the end portions of the elongate element are guided. The use of slotted holes provides a simple, rigid guiding solution that can be integrally formed in both side plates of the main frame. Furthermore, the two side plates are positioned parallel to the crop transport direction and face each other. The side plates may be fabricated using CNC laser cutting and/or CNC machining of sheet metal for precision and durability.

In other embodiments, the drive shaft may include a slider crank mechanism or a closed cam mechanism, designed to convert the rotational movement of the drive shaft into upward or downward motion of the elongate element and, consequently, the plurality of operating units. The drive shaft may be rotationally fixed to either the slider crank mechanism or the closed cam mechanism. The slider crank mechanism may consist of two crank arms connected to the elongate element via a connecting rod. This configuration enables the elongate element to be lifted and supported at multiple points, ensuring simultaneous and uniform movement of the operating units. With this arrangement, the drive shaft only requires actuation on one side.

The drive shaft may be coupled to the slider crank unit or a closed cam unit, more preferably rotationally fixed to the crankarms of the slider crank unit, for example by positive mechanical engagement or by commonly known fastening means. The drive shaft may be rotationally fixed to multiple crankarms each connected to the elongate element via a connecting rod. Preferably, the crankarms and the connecting rods are correspondingly moveable such that the elongate element is moved between its low position and its lifted position by rotation of the drive shaft.

Additionally, the crank arms may rotate in either a clockwise or counterclockwise direction. Each crank arm may be designed without rotational limits, allowing for full 360° rotations in either direction. Optionally, the crank arms may be specifically configured to complete a full 360° rotation, preferably in both clockwise and counterclockwise directions.

In some embodiments, an actuator may be configured to rotate the drive shaft. The actuator can be remotely and/or automatically controlled, for example, from the user cabin of an agricultural machine, enabling fast and effortless operation of the crop cutting device. The lifting mechanism can be driven from either or both ends of the drive shaft. The actuator may be a rotary actuator, such as a hydraulic motor or an electric motor, and may be configured to rotate the drive shaft in either a clockwise or counterclockwise direction. This bidirectional rotation allows for more flexible and efficient operation of the selector mechanism, enabling quicker adjustments to the desired settings.

Alternatively, the actuator may be a manually operated tool, such as a wrench, ratchet, cordless electric drill, or lever, which can be connected to the drive shaft. The drive shaft may include a coupling portion designed to facilitate secure attachment of the actuator.

In embodiments, the lifting mechanism may comprise a transmission unit connected to the drive shaft and/or to the mechanism lifting the elongate element. The transmission unit may be arranged coaxially on the drive shaft. It may comprise a linkage, or a flexible means such as a chain. In other embodiments, the transmission unit may comprise a transmission ratio by gears, rollers, or a linkage, wherein the elongate element can be moved by even smaller actuators by reducing the input torque necessary to drive the elongate element.

In some embodiments, the crop cutting device may include at least one sensor configured to detect the position of the drive shaft, rotatable shaft, actuator, transmission unit, drive plate, or selection plate. These sensors enable monitoring of the selector and/or lifting mechanisms to ensure their synchronous movement. This is particularly important when one or both mechanisms are soiled during field operations. By detecting the positions of key components, the sensors help ensure that the drive and rotatable shafts remain free to move, preventing blockages caused by soil, dust, foreign matter, or crop residues. This reduces the risk of damage to the selector mechanism, lifting mechanism, and any transmission unit in between.

Each sensor may be configured to emit a position signal indicating the detected position. The crop cutting device may include a control unit communicatively connected to the sensors, configured to receive and analyze these position signals. The control unit can compare the signals against predetermined values or with each other, enabling advanced monitoring of the selector and lifting mechanisms. This comparison may account for tolerance deviations or threshold values, allowing minor soiling or wear to be detected and monitored without affecting functionality. However, if the position signals exceed the allowable tolerances or thresholds, the control unit can automatically disable the selector and/or lifting mechanisms to prevent significant damage.

In some embodiments, the control unit may be communicatively connected to the actuator and configured to transmit control signals. These signals enable the actuator to move the drive shaft, allowing the operator to operate the crop cutting device remotely and/or automatically. This setup forms a closed-loop control system in conjunction with the sensors. The monitoring not only helps prevent damage to the selector mechanism, lifting mechanism, or transmission unit but also facilitates independent control of these mechanisms, ensuring their movements are synchronized with one another.

The control unit may be communicatively coupled with a selection panel, allowing the operator to select between the crop cutting settings. The selection panel transmits a selection signal to the control unit and the control unit automatically causes the actuator to rotate the drive shaft until the desired crop cutting setting is engaged via the Geneva mechanism. The control panel may also be incorporated in existing operating means of the crop cutting device or the agricultural vehicle.

In an aspect of the invention, an agricultural machine comprising a crop cutting device as described above is proposed. The agricultural machine may be a baler, a forage harvester, a hay loader, or a swather. The crop cutting device may be an implement detachably coupled to the agricultural machine. Any structural elements and embodiments of the crop cutting device described herein also apply to the agricultural machine according to another aspect of the invention.

Preferred embodiments and advantages of the crop cutting device and the agricultural machine according to the invention will now be described with reference to the attached drawings, in which:
- Fig. 1: is a perspective view of a baler with a crop cutting device according to the present invention;
- Fig. 2: is a schematic, perspective view of the overall crop cutting device according to the present invention;
- Fig. 3: is a perspective view of the crop cutting device according to an embodiment of the present invention;
- Fig. 4: is a perspective side view of the crop cutting device with focus on the selector mechanism according to the embodiment of Fig. 3;
- Fig. 5: is a perspective side view of the crop cutting device with focus on the lifting mechanism according to the embodiment of Fig. 3;
- Fig. 6: is a sectional view on the selector mechanism according to the embodiment of Fig. 3 with a selection plate in a fixed position;
- Fig. 7: is a sectional view on the selector mechanism according to the embodiment of Fig. 3 with a radial slot of a selection plate in engagement with a pin of a drive plate; and
- Fig. 8: is a sectional view on the selector mechanism according to the embodiment of Fig. 3 with a selection plate being rotated by engagement with a drive plate.

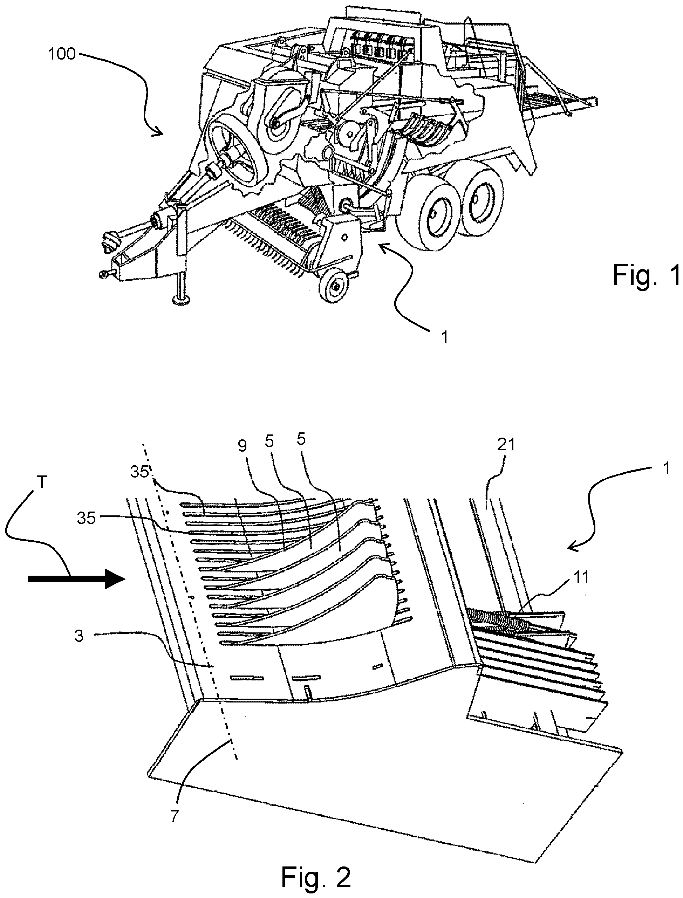

Fig. 1 illustrates a perspective view of a baler 100, specifically a square baler, equipped with a crop cutting device 1 according to an embodiment of the present invention. The crop cutting device 1 is mounted between the hitch and one or more axles of the baler 100. Harvested crop is collected from the field using a pick-up mechanism consisting of rotating bars fitted with flexible tines or teeth, typically constructed from metal or durable plastic. These tines gently engage with the crop, lifting it from the ground as the baler 100 is towed behind an agricultural vehicle.

The crop cutting device 1 preprocesses the collected crop by cutting it into predetermined lengths, effectively modifying its density. This preprocessing step ensures optimized crop handling and preparation before the material is conveyed into the baling chamber, where it is compacted into bales of the desired size and density.

Fig. 2 displays a schematic, perspective view of the crop cutting device 1. Knives 5 are arranged side-by-side protruding through slots 35 in a crop guiding surface 3, which guides the picked-up crop through the crop cutting device 1 in a crop transport direction T. Each knife 5 is individually pivotable around a knife axis 7 below the crop guiding surface 3. Operating units 11 engage on one side with one or multiple knives 5 and facilitate to selectively set the knives 5 from an inoperative position, in which the cutting edges 9 of the respective knives do not protrude through the slots 35 in the crop guiding surface 3, into an operative position, in which the cutting edges 9 of the respective knives 5 protrude through the slots 35 in the crop guiding surface 3.

The operating units 11 are pretensioned when engaged with the respective knives 5, allowing the knives 5 to pivot backward if foreign matter is caught by the crop cutting device 1. This mechanism prevents damage to the knives 5 and avoids foreign matter becoming lodged between the knives 5. The selection of knives 5 protruding through the crop guiding surface 3 determines the cutting strategy or crop cutting setting of the crop cutting device 1. This cutting strategy can be adjusted to modify the density of the cut crop as required.

In Fig. 2, the crop cutting device 1 according to the invention comprises a main frame 21, which encloses the knives 5, the crop guiding surface 3 and the operating units 11 in the lateral direction. The main frame 21 comprises attachments for mounting to the baler 100 as shown in Fig. 1.

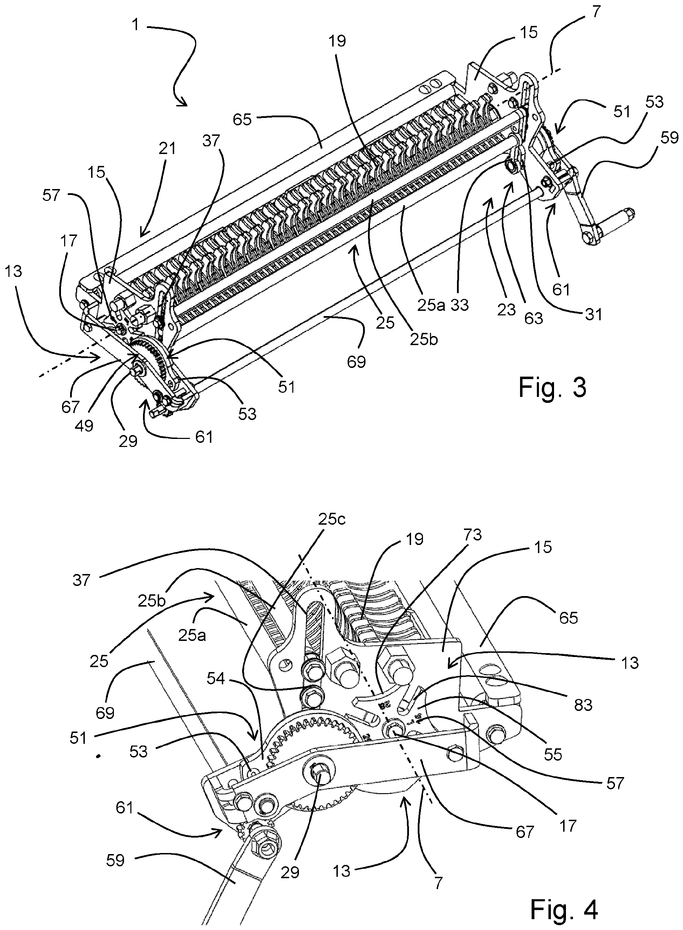

Fig. 3 is a perspective view of the crop cutting device 1 according to an embodiment of the present invention. For a better understanding, the crop cutting device 1 is shown In this embodiment without the crop guiding surface 3, the plurality of knives 5, and the operating units 11. The main frame 21 comprises two side plates 15 on each side of the main frame 21 carrying a selector mechanism 13 and a lifting mechanism 23 which will be explained below. Both sides of the main frame 21 are connected with each other by a transversal frame element 65. Additionally, the components of the selector mechanism 13 and of the lifting mechanism 23 connect the side plates 15 of the main frame with 21 each other.

One selector mechanism 13 and one lifting mechanism 23 are each arranged on one side of the main frame 21 on a respective outer side of the side plates 15. The lifting mechanism is supported and protected by a frame element 67. The selector and lifting mechanisms 13, 23 on both sides of the main frame 21 are synchronized by a synchronization shaft 69. The synchronization shaft 69 allows the mechanisms to be driven from just one side of the main frame 21. In the embodiment of Fig. 3, the lifting and selector mechanisms 13, 23 may be driven by an actuator 59 operated manually by an operator via a crank handle on only one side. In other non-displayed embodiments the mechanisms may be driven by a hydraulic or electric motor as an actuator on one or on both sides.

Driving the selector mechanism 13 and the lifting mechanism 23 by an actuator 59 enables a fully automated crop cutting device 1, where the operator may control the crop cutting device 1 during its operation from a cabin of an agricultural vehicle towing the baler 100 as shown in Fig. 1. Using an actuator 59 enables to monitor and control the movements of the selector mechanism and the lifting mechanism more precisely.

In this particular shown embodiment, the crank handle as actuator 59 drives the synchronization shaft 69, which in turn drives a drive shaft 29 of the lifting mechanism 23 via a transmission unit 61a. The drive shaft 29 of the lifting mechanism 23 drives the selector mechanism as will be explained below. The motion of the lifting mechanism is synchronized with the motion of the selector mechanism.

The lifting mechanism 23 comprises an elongate element 25 which includes two bars, a first bar 25a and a second bar 25b. In this embodiment, connection plates 25c on each lateral end of the first and the second bars 25a, 25 b connect the bars 25a, 25 b with each other. The elongate element 25 extends in a transverse direction to the crop transport direction T between both sides of the main frame 21.

The operating units 11, not shown in Fig. 3, partially extend between the first and second bars 25a, 25b. The movement of the elongate element 25, triggered by the upward or downward motion of the lifting mechanism, consequently actuates the operating units 11. Due to the presence of the upper second bar 25b, the operating units 11 can also be shifted into their lower operating position. For instance, when the elongate element 25 moves downward, it facilitates this adjustment. Alternatively, the elongate element 25 may be configured as an integral component, rather than being composed of two separate bars 25a, 25b. In such a configuration, it could be a welded structure extending across both sides of the main frame 21, with cutouts allowing the operating units 11 to extend in the crop transport direction T.

The elongate element 29 may be lifted and lowered through a slider cam unit 63 comprising a crankarm 31 and a connecting rod 33, wherein the crankarm 31 is directly connected to the drive shaft 29. Thus, a rotation of the drive shaft 29 results in positioning the elongate element 25 in its lifted or lowered position.

Fig. 4 is a perspective side view of the crop cutting device 1 with focus on the selector mechanism according to the embodiment of Fig. 3. In detail, a drive plate 51 of the lifting mechanism 23 and a selection plate 57 of the selector mechanism 13 can be seen. The drive plate 51 and the selection plate 57 form a Geneva mechanism, wherein the drive plate 51 corresponds to a Geneva drive wheel and the selection plate 57 corresponds to a driven Geneva wheel. The details of the Geneva mechanism will be explained below.

Guiding means 37, designed as slots in each side plate 15 of the main frame 21, enable the elongate element 25 to move linearly between its upper and lower positions. In this configuration, the guiding means 37 function as frictional bearings. The connection plates 25c of the elongate element 25 are configured to fit within the guiding means 37, while screw heads and washers secure the connection plates 25c to the first and second bars 25a, 25b, ensuring a stable connection in the transverse direction.

As shown in Fig. 4, the transmission unit 61 in this embodiment comprises a spur gearing with a fixed transmission ratio. This design allows for easier operation of the crop cutting device 1, particularly when driving the drive shaft 29. It enables the use of a crank handle as the actuator 59 or smaller actuators 59, such as hydraulic or electric motors, which require less torque. Alternatively, other types of gearings, such as chain or belt gearings, can be utilized. These alternatives offer high flexibility in installation and are also cost-effective. However, other embodiments are conceivable where the drive shaft 29 is directly driven, either manually or by an actuator.

In the embodiment, frame element 67 is at least partially surrounds the transmission unit61 and comprises bearings, such as frictional bearings or flange mounted bearings, to support the drive shaft 29 and, optionally, parts of the transmission unit 61. Similarly, each side plate 15 of the main frame 21 may also comprise bearings for supporting the drive shaft 29 and optionally parts of the transmission unit 61. The frame element 67 may be fabricated of a bent sheet metal, which is bolted onto the respective side plate 15 which allows for simple assembly, disassembly, and maintenance of the selector mechanism 13 and the transmission unit 61.

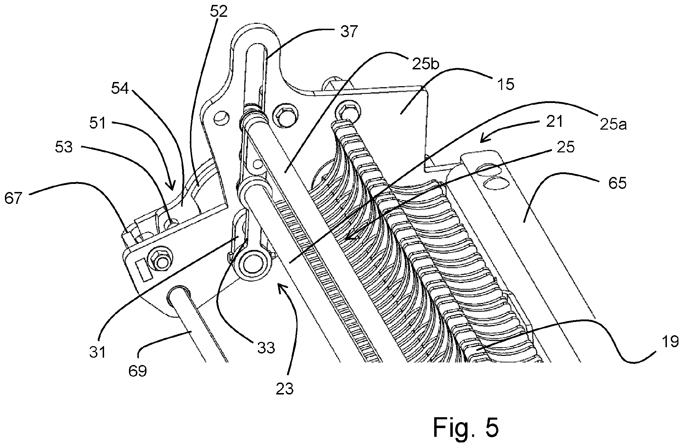

Fig. 5 provides a perspective side view of the crop cutting device 1 in a different angle, with emphasis on the lifting mechanism depicted in Fig. 3. The inner side of the side plate 15 of the main frame 21 is visible. The crank-arm 31 is directly attached to the inner end of the drive shaft 29, with its crankpin connected to a connecting rod eye. The end of the first bar 25a of the elongate element 25 fits into a recess within the connecting rod 33. In other words, the first bar 25a extends through the connecting rod 33 via the upper connecting rod bearing.

In Fig. 5, a crank pin of the lifting mechanism 23 is located in its bottom dead center with the elongate element 25 being in the lowered position. Similarly, rotating the drive shaft 29 so that the crank pin is positioned in its top dead center leads to the elongate element 25 being located in the lifted or upper position. The crankarm 31 is configured to freely rotate together with the drive shaft 29 in both directions, clockwise or counterclockwise. A rotatable shaft 17 of the selector mechanism 13 is supported by each side plate 15 on either side of the main frame 21. The shaft 17 is designed to rotate in both directions, clockwise and counterclockwise.

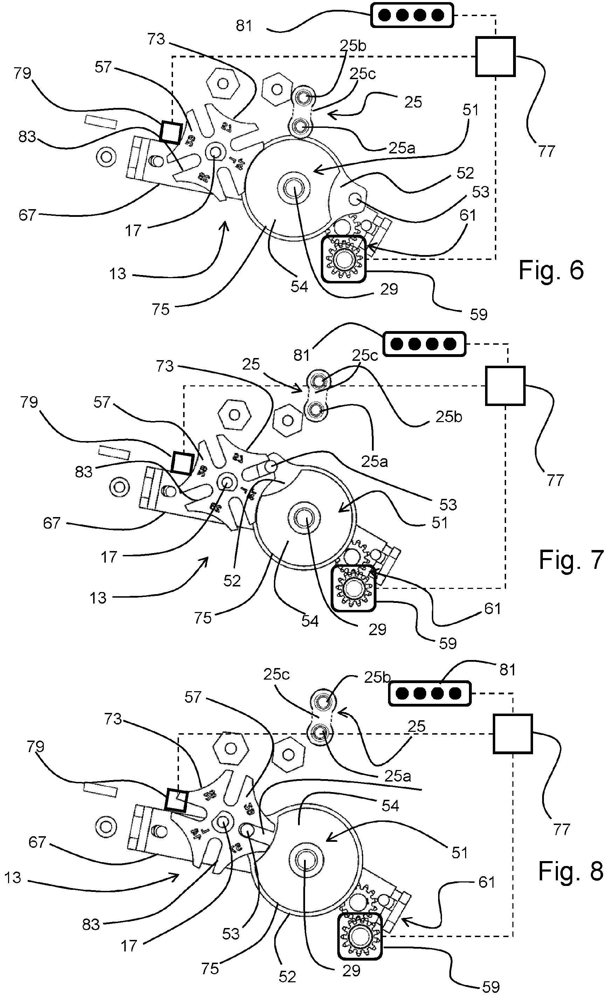

Fig. 6 is a sectional view on the selector mechanism 13 according to the embodiment of Fig. 3 with the selection plate 57 in a first fixed position. The selector mechanism 13 comprises the selection plate 57 having four radial slots 83 extending from the circumference towards the center of the selection plate 57. The four radial slots 83 define a division of the Geneva transmission. Here, a 360° rotation of the drive shaft 29 and thus the drive plate 51, results in a 90° rotation of the selection plate 57. In other embodiments, different divisions such as 30°, 45°, 60°, 120° and so on may be provided leading to corresponding rotations of the selection plate 57 upon one full rotation of the drive plate 51. The selection plate 57 is rotatably fixed to the rotatable shaft 17 to transmit the rotation of the drive shaft 29 into a rotation of the selection plate 57.

Between adjacent radial slots 83 the selection plate 57 comprises four concave outer circumferential surfaces 73 each corresponding to a convex outer circumferential surface 75 of the drive plate 51. The concave outer circumferential surfaces 73 of the selection plate 57 and the convex outer circumferential surface 75 of the drive plate 51 engage with each other in a form fit manner. Such engagement prevents a rotation of the selection plate 57, whereas the drive plate 51 is configured to freely rotate unless a pin 53 attached to the drive plate 51 engages with one of the radial slots 83 of the selection plate 57 (described in relation to Fig. 7). It is noted that the selection plate 57 may comprise markings that indicate crop cutting settings of the crop cutting device 1 relating to the number of knives 5 to be selected for cutting. This allows the operator to view the selection settings of the crop cutting device 1 from the side.

During engagement of the concave outer circumferential surfaces 73 of the selection plate 57 with the convex outer circumferential surface 75 of the drive plate 51, the selection plate 57 remains stationary, this is, rotation of the drive shaft 29 is not transmitted to the rotatable shaft 17, when the corresponding surfaces engage with each other. In this engagement situation between the concave outer circumferential surfaces 73 of the selection plate 57 and the convex outer circumferential surface 75 of the drive plate 51, the rotation of the selection plate 57 is locked.

The elongate element 25 is not shown in Figs. 6 to 8, but the connection plate 25c of first and second bars 25a, 25b can be identified. With the rotation of the drive shaft 29 the elongate element 25 is correspondingly moved up or down due to the slider cam unit 63 of the lifting mechanism 23 as explained above.

The drive plate 51 is rotatably fixed to the drive shaft 29 to transmit the torque received from the transmission unit 61. In this embodiment, the drive plate 51 includes a carrier plate 52, a guiding plate 54 comprising the convex outer circumferential surface 75, and the pin 53 for engaging with one of the radial slots 83 of the selection plate 57. The guiding plate 54 comprises a cut-out around the pin 53 so that the selection plate 57 can freely engage with the pin 53. The components of the driving plate 51 may be welded and/or otherwise securely fastened to one another.

Fig. 7 is a sectional view of the selector mechanism 13 of the embodiment of Fig. 3 in a second position where a radial slot 83 of the selection plate 57 is about to engage with the pin 53 of a drive plate 51. The difference between Fig. 6 and Fig. 7 is that the drive plate 51 has been turned counterclockwise, such that the pin 53 engages with the respective radial slot 83. The matching outer circumferential surfaces 73, 75 of the drive plate 51 and the selection plate 57 are still at least partially engaging with each other. Before reaching the second position shown in Fig. 7, the selection plate 57 and thus the rotatable shaft 17 remain stationary, while the drive shaft 29 and the elongate element 25 via the lifting mechanism 23 are continuously moving between their positions of Fig. 6 and Fig. 7. In Fig. 7, the elongate element 25 and the first and the second bars 25a, 25b are lifted relative to their position in Fig. 6.

Fig. 8 is a sectional view of the selector mechanism 13 of Fig. 3 in a third position with the selection plate 57 being rotated in engagement with the drive plate 51. In comparison with the second position of Fig. 7, the selection plate 57 together with the rotatable shaft 17 have been rotated by the drive plate 51. The pin 53 of the drive plate 51 is in full engagement with the radial slot 83 of the selection plate 57 causing a synchronous motion of the drive plate 51 and the selection plate 57. In contrast to the positions of Figs. 6 and 7, the corresponding outer circumferential surfaces 73, 75 of the drive plate 51 and the selection plate 57 are no longer in engagement with each other. The outer circumference of the selection plate 57 passes through the cut-out around the pin 53 of the drive plate 51 and is able to rotate. The selection plate 57 is rotated by the drive plate 51 until the pin 53 exits the radial slot 83 of the selection plate 57, similar to the position displayed in Fig. 7. Then, the selection plate 57 and thus the rotatable shaft 17 remain stationary again in a locked position, until the further rotation of the drive plate 51 leads to the next occurrence of the position of Fig. 7. A comparison of the positions Figs. 7 and 8 reveals that the first and the second bars 25a, 25b are only slightly lifted due to the slider cam unit 63 movement around the top dead center of the crank pin, as described in conjunction with Fig. 5.

In embodiments, the crop cutting device 1 may comprise a control unit 77, an operating panel 81, and at least one sensor means 79. These elements are shown in Figs. 6 to 8 but may also be incorporated, in the embodiments of Figs. 3 to 5. However, the at least one sensor means 79 is configured the detect and monitor a position of at least one component of the group consisting of the selection plate 57, the rotatable shaft 17, the drive plate 51, the drive shaft 29, the slider cam unit 63, the crankarm 31, the connecting rod 33, the pin 53, and the transmission unit 61 or other elements of the selector or lifting mechanism 13, 23. The at least one sensor means 79 is configured to transmit the detected position as a position signal to the control unit 77 which in turn is configured to receive and process the position signal. The control unit 77 is configured to compare the position signal with a set of values or compare multiple position signals with each other. The control unit 77 is generally communicatively coupled with the at least one sensor means 79, the actuator 59, and the operating panel 81. The at least one sensor means 77 may be any type of position sensor known in the art, e.g. an inductive sensor, a photoelectric sensor, a magnetic sensor, a camera, etc.

Based on the comparison within the control unit 77, the control unit 77 causes the actuator 59 to drive the drive shaft 29 via the transmission unit 61, thereby forming a closed loop control of the crop cutting device 1. The closed loop control of the crop cutting device 1 enables the operation of the crop cutting device 1 out of a cabin of an agricultural vehicle. In this way, wear or defects in the crop cutting device 1 may be detected and at least partly eliminated due to the proposed control method. In some cases, where the comparison significantly differs from the set of values or exceeds a set threshold value, in particular where multiple position signals are compared with each other, the control unit 77 is also configured to deny any operation of the crop cutting device 1 to prevent further damages.

Via the operating panel 81, a user of the crop cutting device 1 is able to select a crop cutting setting. The control unit 77 receives such a control signal indicating the selected crop cutting setting from the operating panel 81 and causes the actuator 59 to rotate the drive shaft 29 respectively, until the desired crop cutting setting has been engaged by the selector mechanism and the lifting mechanism.

With the present invention a crop cutting device 1 is provided which enables a smooth, safe and remotely controllable knife selection, which requires little installation space and which generally ensures a reliable and secure cutting function also in a very dusty environment.

It is noted that it shall be obvious for the skilled person to combine any structural or functional elements from the description above to form new embodiments that are not described herein, unless that these newly formed embodiments do not contradict each other from the technical point of view and understanding of the person skilled in the art.

### List of reference numbers:

- 1: crop cutting device
- 3: crop guiding surface
- 5: knife
- 7: knife axis
- 9: cutting edge
- 11: operating unit
- 13: selection mechanism
- 15: side plate
- 17: rotatable shaft
- 19: engagement element
- 21: main frame
- 23: lifting mechanism
- 25: elongate element
- 29: drive shaft
- 31: crankarm
- 33: connecting rod
- 35: slot
- 37: guiding means
- 51: drive plate
- 52: carrier plate
- 53: pin
- 54: guiding plate
- 55: radial slot
- 57: selection plate
- 59: actuator
- 61: transmission unit
- 63: closed cam unit/ slider cam unit
- 65: transversal frame element
- 67: frame element
- 69: synchronization shaft
- 73: concave outer circumferential surface
- 75: convex outer circumferential surface
- 77: control unit
- 79: sensor means
- 81: operating panel
- 83: radial slot
- 100: baler
- 25a: first bar
- 25b: second bar
- 25c: connection plate
- T: crop transport direction

## Claims

1. Crop cutting device (1) comprising:
a crop guiding surface (3) including a plurality of substantially parallel slots (35) extending in a crop transport direction (T) over the crop guiding surface (3);
a plurality of knives (5) arranged side-by-side, wherein each knife (5) is aligned with a respective slot (35) and is pivotable about a knife axis (7) extending substantially perpendicular to the slots (35);
a plurality of operating units (11) in parallel to the plurality of knives (5) being movable between a disengaged position and an engaged position;
a selector mechanism (13) configured to selectively engage one or more of the plurality of operating units (11), wherein the selector mechanism (13) comprises at least one selection position and a rotatable shaft (17), wherein the rotatable shaft (17) comprises a plurality of engagement elements (19), each engagement element (19) configured to engage with the respective operating unit (11); and
a lifting mechanism (23) comprising an elongate element (25) extending between a first side and a second side of a main frame (21) of the crop cutting device (1) and a rotating element (49) rotatable by a drive shaft (29) wherein the elongate element (25) is configured to be moved between a low position and a lifted position and vice versa, thereby moving the operating units (11) between one and the other of the engaged position and the disengaged position,
wherein the drive shaft (29) of the lifting mechanism (23) is configured to engage with the rotatable shaft (17) of the selector mechanism (13) such that during engagements, a rotation of the drive shaft (29) is converted into a rotation of the rotatable shaft (17), while between engagements, the rotatable shaft (17) remains stationary.

2. Crop cutting device (1) according to claim 1, **characterized in that** the drive shaft (29) comprises a drive plate (51) having a pin (53) which is configured to engage with one of a plurality of radial slots (55) provided on a selection plate (57) of the rotatable shaft (17).

3. Crop cutting device (1) according to one of the previous claims, **characterized in that** the elongate element (25) comprises a first bar (25a) and, optionally, a second bar (25b) parallel to the first bar (25a), wherein the operating units (11) extend preferably between the first bar (25a) and the second bar (25b).

4. Crop cutting device (1) according to one of the previous claims, **characterized in that** the drive shaft (29) comprises a slider crank unit (63) or a closed cam unit (63) wherein the slider crank unit (63) or the closed cam unit (63) are configured to convert the rotational movement of the drive shaft (29) into an upward or downward movement of the plurality of operating units (11).

5. Crop cutting device (1) according to one of the previous claims, **characterized in that** in use, a 360° rotation of the drive shaft (29) is translated into a rotation less than 360° of the rotatable shaft (17), e.g. a 180°,120°, 90°, 60°, 45°, 30° rotation of the rotatable shaft (17).

6. Crop cutting device (1) according to one of the previous claims, characterized that the drive shaft (29) is driven by an actuator (59).

7. Crop cutting device (1) according to claim 6, **characterized in that** the actuator (59) is configured to move the drive shaft (29) directly or indirectly by a transmission unit (61), e.g. a linkage, or a flexible means such as a chain or belt.

8. Crop cutting device (1) according to one of the previous claims, **characterized in that** the drive shaft (29) and the rotatable shaft (17) are configured to engage with each other directly or indirectly by means of a transmission unit (61).

9. Crop cutting device (1) according to one of the previous claims, **characterized in that** when the drive shaft (29) and the rotatable shaft (17) are not engaged, the rotatable shaft (17) is locked from rotation in both directions.

10. Crop cutting device (1) according to one of the previous claims, **characterized in that** the main frame (21) comprises two side plates (15) on the first side and second side, respectively, each side plate (15) comprising guiding means (37) configured to guide the elongate element (25).

11. Crop cutting device (1) according to claim 10, **characterized in that** the guiding means (37) comprises a slotted hole in each of the two side plates (15), configured to guide the elongate element (25).

12. Crop cutting device (1) according to one of the previous claims, **characterized in that** the engagement of the drive shaft (29) of the lifting mechanism (23) with the rotatable shaft (17) of the selector mechanism (13) is provided on one side or on both sides of the main frame (21) of the crop cutting device (1).

13. Crop cutting device (1) according to any of the previous claims, **characterized in that** the crop cutting device further comprises at least one sensor means (79) configured to detect a position of at least one of the drive shaft (29), the rotatable shaft (17), the actuator (59), and the transmission unit (61),
wherein each of the at least one sensor means (79) is configured to emit the detected position as a position signal, and
wherein the crop cutting device (1) further comprises a control unit (77) communicatively coupled with the at least one sensor means (79) and configured to receive the emitted position signals and compare the position signals with predetermined values and/or compare the positions signals with each other.

14. Crop cutting device (1) according to claims 13, **characterized in that** the control unit (77) is communicatively coupled with the actuator (59) and configured to transmit control signals to the actuator (59) causing the actuator (59) to move the drive shaft (29) such that the operator is able to operate the crop cutting device (1) remotely and/or automatically, thereby preferably forming a closed loop control in conjunction with the at least one sensor means (79).

15. Agricultural machine (100) comprising a crop cutting device (1) according to one of the previous claims.
